# EUROPEAN PATENT SPECIFICATION

(11) **EP 3 018 513 B1**
(45) Date of publication and mention of the grant of the patent: **06.09.2017**
(21) Application number: 14192075.1
(22) Date of filing: 06.11.2014
(51) Int. Cl.: G02B 6/44

(54) **Fiber optic distribution device and assembling method**
Faseroptische Verteilungsvorrichtung und Montageverfahren
Dispositif de distribution de fibre optique et procédé d'assemblage

(43) Date of publication of application: 11.05.2016
(73) Proprietor: CCS Technology, Inc., Wilmington, DE 19803 (US)
(72) Inventor: Kreczmer, Wojciech, 91-848 Lodz (PL); Gralewski-Sek, Grzegorz, 91-849 Lodz (PL)
(74) Representative: Sturm, Christoph

(56) References cited:
- WO-A2-2010/024846
- CN-U- 203 054 282

## Description

The present patent application relates to a fiber optic distribution device. The present patent application relates further to a method for assembling the same.

When designing data transmission networks comprising optical fibers, it is necessary to handle optical fibers, especially to connect optical fibers to one another. Junctions between optical fibers can be provided by patch connections and splice connections. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. So called wall boxes are used for the handling of junctions between optical fibers both outside buildings and inside buildings.

WO 2010/024846 A2 discloses a fiber optic distribution device. The fiber optic distribution device disclosed by WO 2010/024846 A2 comprises a mounting frame having at least two vertically oriented mounting bars. The fiber optic distribution device disclosed by WO 2010/024846 A2 comprises further at least one fiber optic management unit mounted to the mounting frame, wherein the or each fiber optic management unit comprises a chassis, the chassis having side walls and a tray rail guides attached to inwardly facing surfaces of opposed side walls, the tray rail guides being configured to receive a plurality of vertically stacked fiber optic equipment trays within the chassis of the respective fiber optic management unit in such a way that each of the fiber optic equipment trays is independently translatable in horizontal direction relative to the chassis.

The fiber optic distribution device disclosed by WO 2010/024846 A2 comprises further mounting brackets attached to outwardly facing surfaces of the opposed side walls of the chassis of the or each fiber optic management unit for mounting the respective fiber optic management unit to the vertically oriented mounting bars of the mounting frame, wherein each mounting bracket comprises a first mounting leg through which the respective mounting bracket is mountable to a side wall of a chassis of a fiber optic management unit and a second mounting leg running almost perpendicular to the first mounting leg through which the respective mounting bracket is mountable to a mounting bar of the mounting frame.

The mounting of a fiber optic management unit to the mounting bars of the mounting frame by such mounting brackets is time consuming. Usually two or more installers are needed to mount a fiber optic management unit to a mounting frame.

The present application is based on the object to provide a novel fiber optic distribution device which allows an easier, less time-consuming mounting of the respective fiber optic management unit to the mounting frame.

The fiber optic distribution unit according to the present patent application is defined in claim 1. The fiber optic distribution device comprises a first group of mounting elements and a second group of mounting elements. The first group of mounting elements is provided by at least one mounting screw mounted to a first mounting bar of the mounting frame and by at least one first opening located at a first side wall of the chassis of the respective fiber optic management unit. The second group of mounting elements is provided by at least one mounting pin extending from a second side wall of the chassis of the respective fiber optic management unit and by at least one second opening of a second mounting bar of the mounting frame. The invention provides an easier, less time-consuming mounting of the respective fiber optic management unit to the mounting frame. The mounting can be done by one installer only.

The solution according to the present patent application is fully modular in terms of width of the modules, and could be also mirrored. With the solution according to the present patent application the number of required parts is reduced which causes reduction of installation time. The solution according to the present patent application allows the replacement of any fiber optic management unit in a fully equipped mounting frame without impact to other fiber optic management units while solutions known from the prior art require the removing/moving of some or all fiber optic managements units placed above the one to be replaced. All operations with the solution according to the present patent application can be made by only one installer without impact on safety.

The or each mounting screw of the first group of mounting elements may be preferably inserted into a respective first opening located at the first side wall of the chassis of the respective fiber optic management unit when the respective fiber optic management unit moves in a first linear direction relative to the mounting frame. The or each mounting pin of the second group of mounting elements may be preferably inserted into a respective second opening of the second mounting bar of the mounting frame when the respective fiber optic management unit thereafter moves in a second linear direction relative to the mounting frame, wherein said second linear direction runs almost perpendicular to said first linear direction. After the or each mounting pin has been inserted into the respective second opening of the second mounting bar of the mounting frame, the fiber optic module is secured against falling down and increases safety. This slide-and-secure-type mounting concept also allows the replacement of any fiber optic management unit in a fully equipped mounting frame without impact to other fiber optic management units of the fully equipped mounting frame.

According to a preferred embodiment, the or each first opening located at the first side wall of the respective fiber optic management unit is integral with the first side wall of the respective fiber optic management unit. This provides a further reduction of required parts and of installation time.

According to a preferred embodiment, the or each one mounting pin extending from the second side wall of the chassis is integral with the second side wall of the chassis of the respective fiber optic management unit or is provided by a separate pin being fixedly attached to the second side wall of the chassis of the respective fiber optic management unit. This provides a further reduction of required parts and of installation time.

Preferably, the or each first opening which is located at the first side wall is designed as an oblong opening or keyhole having a mounting screw entry section with a relative large diameter and a mounting screw holding section with a relative small diameter. This allows an easy and secure mounting of a fiber optic management unit to the mounting frame of the fiber optic distribution device.

The method for assembling the fiber optic distribution device is defined in claim 10.

Embodiments of the fiber optic distribution device are given in the dependent claims and the description below. Exemplary embodiments will be explained in more detail with reference to the drawing, in which:
- Figure 1: shows a section of mounting frame of a fiber optic distribution device together with a section of a chassis of a fiber optic management unit to be mounted to said mounting frame in a first status;
- Figure 2: shows the arrangement of Figure 1 in a second status;
- Figure 3: shows the arrangement of Figure 2 in a third status;
- Figure 4: shows a first perspective side view of a fiber optic management unit to be mounted to a mounting frame;
- Figure 5: shows a second perspective side view of the fiber optic management unit of Figure 4; and
- Figure 6: shows a detail of Figure 4.

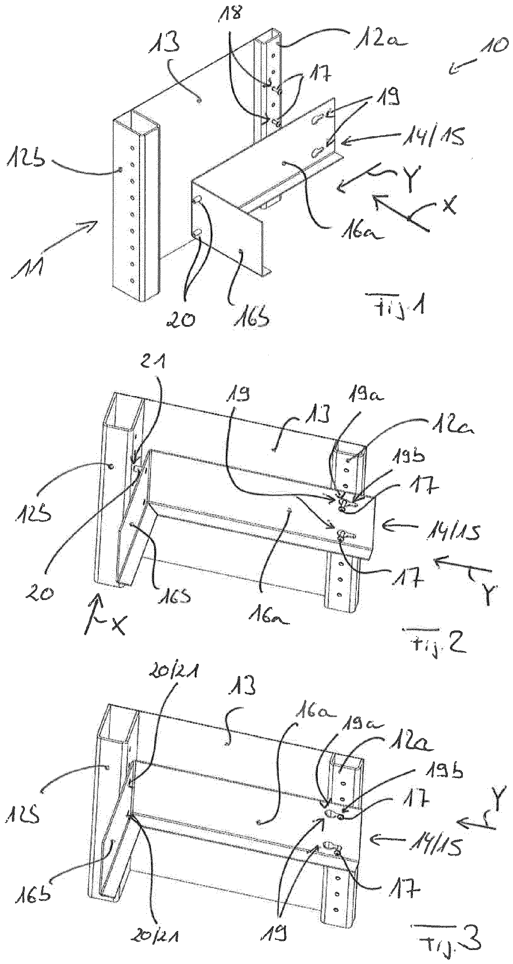

Figures 1 to 3 show details of a fiber optic distribution device 10.

The fiber optic distribution device 10 comprises a mounting frame 11 which is partially shown in Figures 1 to 3. The mounting frame 11 has at least two vertically oriented mounting bars 12a, 12b. The vertically oriented mounting bars 12a, 12b of the mounting frame 11 are preferably connected by horizontally oriented connection bars or by side walls 13. The fiber optic distribution device 10 comprises further at least one fiber optic management unit 14. Figures 1 to 3 show partially a chassis 15 of such a fiber optic management unit 14, namely two side walls 16a, 16b of the chassis 15. The fiber optic management unit 14 is mounted with the chassis 15 to the mounting frame 11, namely to the vertically oriented mounting bars 12a, 12b.

The fiber optic distribution device 10 comprises a first group of mounting elements and a second group of mounting elements.

The first group of mounting elements is provided by at least one mounting screw 17 mounted to a first mounting bar 12a of the mounting frame 11. Each of said mounting screws 17 is received by a mounting hole 18 of the first mounting bar 12a. The first group of mounting elements is further provided by at least one first opening 19 located at a first side wall 16a of the chassis 15 of the respective fiber optic management unit 14.

In the embodiment shown in Figure 1 to 3, the first group of mounting elements which is used to mount the shown fiber optic management unit 14 to the mounting frame 11 comprises two mounting screws 17 each received by a respective mounting opening 18 of the first mounting bar 12a of the mounting frame 11 and each received by two first openings 19 located at the first side wall 16a of the chassis 15 of the fiber optic management unit 14.

The second group of mounting elements is provided by at least one mounting pin 20 extending from a second side wall 16b of the chassis 15 of the respective fiber optic management unit 14. The second group of mounting elements is further provided by at least one second opening 21 of a second mounting bar 12b of the mounting frame 11.

In the embodiment shown in Figure 1 to 3, the second group of mounting elements which is also used to mount the shown fiber optic management unit 14 to the mounting frame 11a comprises two mounting pins 20 extending from the second side wall 16b of chassis 15 of the shown fiber optic management unit 14 each received by a second openings 21 of the second mounting bar 12b of the mounting frame 11.

Each mounting screw 17 of the first group of mounting elements becomes first screwed into a mounting opening 18 of the first mounting bar 12a, namely with a threaded section of the same.

Then, the mounting screws 17 become inserted into a respective first opening 19 located at the first side wall 16a of the chassis 15 of the fiber optic management unit 14 when the respective fiber optic management unit 14 is moved in a first linear direction X relative to the mounting frame 11. Each of the mounting screws 17 becomes inserted into a respective first opening 19 with a screw head section of the mounting screw 17 being positioned opposite to the threaded section of the respective mounting screw 17.

Thereafter, each mounting pin 20 of the second group of mounting elements becomes inserted into a respective second opening 21 of the second mounting bar 12a of the mounting frame 11 when the fiber optic management unit 14 is afterwards moved in a second linear direction Y relative to the mounting frame 11, wherein said second linear direction Y runs perpendicular to said first linear direction X.

Each of the first openings 19 which is located at the first side wall 16a of the chassis 15 of the fiber optic management unit 14 is designed as an oblong opening, also called keyhole, having a mounting screw entry section 19a with a relatively large diameter and a mounting screw holding section 19b with a relatively small diameter.

When the fiber optic management unit 14 becomes moved in the first linear direction X relative to the mounting frame 11, the screw heads of the mounting screw 17 enter into the mounting screw entry sections 19a of the first openings 19. Afterwards, when the fiber optic management unit 14 is moved in the second linear direction Y relative to the mounting frame 11, the screw heads of the mounting screws 17 become moved into the mounting screw holding sections 19b of the first openings 19. In this status the position of the fiber optic management unit 14 is secured.

The method to mount a fiber optic management unit 14 to a mounting frame 11 is a slide-and-secure-type mounting method based on a step operation to install fiber optic management unit 14 to the mounting frame 11. First step is to install the mounting screws 17 into the first mounting bar 12a. Second step is to move the fiber optic management unit 14 in the first direction X so that the mounting screws 17 are inserted into the first openings 19. Third step is to slide the fiber optic management unit 14 in the second direction Y so that the mounting pins 20 are inserted into the second openings 21. Fourth step is to secure the position of fiber optic management unit 14 by tighten the mounting screws 17.

The mounting openings 18 within the first mounting bar 12a are threaded. The first mounting bar 12a comprises a pattern of threaded openings 18. The openings 21 within the second mounting bar 12b are unthreaded through holes. The second mounting bar 12b comprises a pattern of unthreaded openings 21. The chassis 15 of the fiber optic management unit 14 to be mounted has a pattern of mounting pins 20 extending from the second side wall 16b and a pattern of keyholes or oblong holes located at the first side wall 16a. As described above, the mounting pins 20 slide into the openings 21 of the mounting bar 12b when the fiber optic management unit 14 is moved in the direction Y while the preinstalled mounting screws 17 are placed in the oblong openings 19. After the fiber optic management unit 14 has been positioned correctly, the mounting screws 17 are tightened and secure the fiber optic management unit 14. All operation can be done by only one installer.

The or each one mounting pin 20 which extends from the second side wall 16b of the chassis 15 may be integral with the second side wall 16b of the chassis 15 of the respective fiber optic management unit 14 or may be provided by a separate pin being fixedly attached to the second side wall 16b of the chassis 15 of the respective fiber optic management unit 14. This provides a further reduction of required parts and of installation time

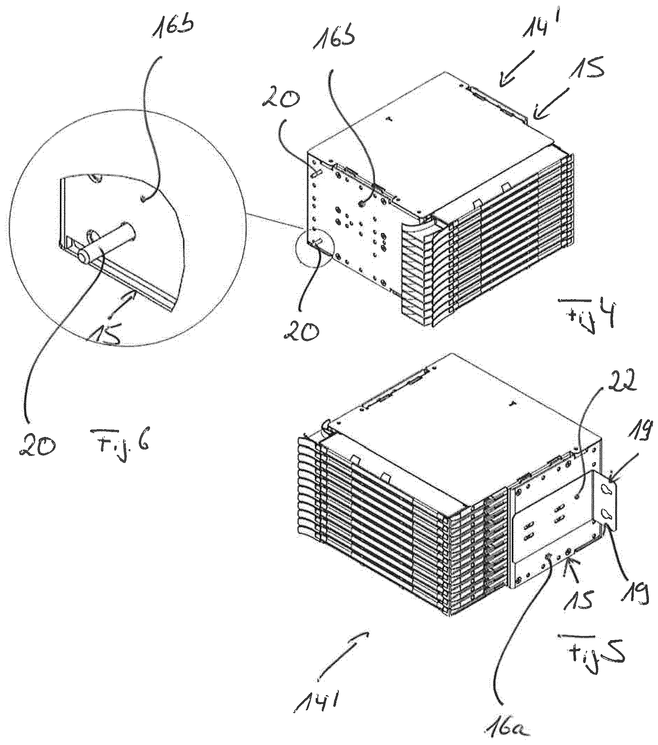

In the embodiment shown in Figures 1 to 3, the first openings 19 are integral with the first side wall 16a of the chassis 15 of the fiber optic management unit 14. In the embodiment shown in Figures 4 to 6, the first openings 19 are integral with a separate mounting bracket 23 mounted to the first side wall 16a of the chassis 15 of the fiber optic management unit 14'.

This solution according to the present disclosure is fully modular in terms of width of the modules, and can be also mirrored. With the solution according to the present patent application the number of required parts is reduced which causes reduction of installation time. The solution according to the present patent application allows a replacement of any fiber optic management unit 14, 14' in a fully equipped mounting frame 11 without impact to other fiber optic management units 14, 14'. All operations with the solution according to the present patent application can be made by only one installer without impact on the safety.

### List of reference numerals

- 10: fiber optic distribution device
- 11: mounting frame
- 12a: mounting bar
- 12b: mounting bar
- 13: Side wall
- 14: fiber optic management unit
- 14': fiber optic management unit
- 15: chassis
- 16a: side wall
- 16b: side wall
- 17: mounting screw
- 18: mounting opening
- 19: first opening
- 19a: mounting screw entry section
- 19b: mounting screw holding section
- 20: mounting pin
- 21: second opening
- 22: mounting bracket

## Claims

1. A fiber optic distribution device (10), comprising:
a mounting frame (11) having at least two vertically oriented mounting bars (12a, 12b);
at least one fiber optic management unit (14, 14') mounted to the mounting frame (11), wherein the respective fiber optic management unit (14, 14') comprises a chassis (15), the chassis (15) having side walls (16a, 16b);
mounting elements for mounting the respective fiber optic management unit (14) to the vertically oriented mounting bars (12a, 12b) of the mounting frame (11),
**characterized by**
a first group of mounting elements is provided by at least one mounting screw (17) mounted to a first mounting bar (12a) of the mounting frame (11) and by at least one first opening (19) located at a first side wall (16a) of the chassis (15) of the respective fiber optic management unit (14, 14'),
a second group of mounting elements is provided by at least one mounting pin (20) extending from a second side wall (16b) of the chassis (15) of the respective fiber optic management unit (14, 14') and by at least one second opening (21) of a second mounting bar (12b) of the mounting frame (11).

2. The fiber optic distribution device of claim 1, **characterized in that** the or each mounting screw (17) of the first group of mounting elements becomes inserted into a respective first opening (19)located at the first side wall (16a) of the chassis (15) of the respective fiber optic management unit (14, 14') when the respective fiber optic management unit (14, 14') becomes moved in a first linear direction (X) relative to the mounting frame (11).

3. The fiber optic distribution device of claim 2, **characterized in that** the or each mounting pin (20) of the second group of mounting elements becomes inserted into a respective second opening (21) of the second mounting bar (12b) of the mounting frame (11) when the respective fiber optic management unit (14, 14') becomes thereafter moved in a second linear direction (Y) relative to the mounting frame (11), wherein said second linear direction runs (Y) almost perpendicular to said first linear direction (X).

4. The fiber optic distribution device of one of claims 1 to 3, **characterized in that**
the first group of mounting elements comprises at least two mounting screws (17) mounted to the first mounting bar (12a) of the mounting frame (11) and at least two first openings (19) located at the first side wall (16a) of the respective fiber optic management unit (14, 14'),
the second group of mounting elements comprises at least two mounting pins (20) extending from the second side wall (16b) of the chassis (15) of the respective fiber optic management unit (14, 14') and at least two second openings (21) of the second mounting bar (12b) of the mounting frame (11).

5. The fiber optic distribution device of one of claims 1 to 4, **characterized in that** the or each first opening (19) which is located at to the first side wall (16a) of the respective fiber optic management unit (14, 14') is integral with the first side wall (16a) of the chassis (15) of the respective fiber optic management unit (14, 14').

6. The fiber optic distribution device of one of claims 1 to 4, **characterized in that** the or each first opening (19) which is located at the first side wall (16a) of the respective fiber optic management unit (14, 14') is provided by a separate mounting bracket (22) mounted to the first side wall (16a) of the respective fiber optic management unit (14, 14').

7. The fiber optic distribution device of one of claims 1 to 6, **characterized in that** the or each one mounting pin (20) which extends from the second side wall (16b) of the chassis (15) is integral with the second side wall (16b) of the chassis (15) of the respective fiber optic management unit (14, 14').

8. The fiber optic distribution device of one of claims 1 to 6, **characterized in that** the or each one mounting pin (20) which extends from the second side wall (16b) of the chassis (15) is provided by a separate pin being fixedly attached to the second side wall (16b) of the chassis (15) of the respective fiber optic management unit (14, 14').

9. The fiber optic distribution device of one of claims 1 to 8, **characterized in that** the or each first opening (19) which is located at the first side wall (16a) is designed as an oblong opening or keyhole having a mounting screw entry section (19a) with a relatively large diameter and a mounting screw holding section (19b) with a relatively small diameter.

10. Method for assembling a fiber optic distribution device according to one of claims 1 to 9, comprising the following steps:
providing a mounting frame (11) having at least two vertically oriented mounting bars (12a, 12b) and a fiber optic management unit (14, 14') to be installed at the mounting frame (11);
installing the or each mounting screws (17) of the first group of mounting elements at the first mounting bar (12a) of the mounting frame (11);
inserting the or each mounting screw (17) of the first group of mounting elements in a respective first opening (19) of the first group of mounting elements;
inserting the or each mounting pin (20) of the second group of mounting elements in a respective second opening (21) of the second group of mounting elements.

11. Method of claim 10, **characterized in that** the or each mounting screw (17) of the first group of mounting elements becomes inserted in the respective first opening (19) of the first group of mounting elements when moving the respective fiber optic management unit (14, 14') in a first linear direction (X) relative to the mounting frame (11).

12. Method of claim 11, **characterized in that** the or each mounting pin (20) of the second group of mounting elements becomes inserted into a respective second opening (21) of the second mounting bar (12b) of the mounting frame (11) when the respective fiber optic management unit (14, 14') becomes thereafter moved in a second linear direction (Y) relative to the mounting frame (11), wherein said second linear direction runs (Y) almost perpendicular to said first linear direction (X).

## Patentansprüche

1. Faseroptische Verteilungsvorrichtung (10), umfassend:
einen Montagerahmen (11) mit mindestens zwei vertikal ausgerichteten Montageschienen (12a, 12b);
mindestens eine an den Montagerahmen (11) montierte faseroptische Verwaltungseinheit (14, 14'), wobei die jeweilige faseroptische Verwaltungseinheit (14, 14') ein Gehäuse (15) umfasst, wobei das Gehäuse (15) Seitenwände (16a, 16b) aufweist;
Montagelemente zum Montieren der jeweiligen faseroptischen Verwaltungseinheit (14) an die vertikal ausgerichteten Montageschienen (12a, 12b) des Montagerahmens (11),
**dadurch gekennzeichnet, dass**
eine erste Gruppe von Montageelementen durch mindestens eine Montageschraube (17), die an eine erste Montageschiene (12a) montiert ist, und durch mindestens eine erste Öffnung (19), die sich an einer ersten Seitenwand (16a) des Gehäuses (15) der jeweiligen faseroptischen Verwaltungseinheit (14, 14') befindet, bereitgestellt wird,
eine zweite Gruppe von Montageelementen durch mindestens einen Montagestift (20), der sich von einer zweiten Seitenwand (16b) des Gehäuses (15) der jeweiligen faseroptischen Verwaltungseinheit (14, 14') erstreckt, und durch mindestens eine zweite Öffnung (21) einer zweiten Montageschiene (12b) des Montagerahmens (11) bereitgestellt wird.

2. Faseroptische Verteilungsvorrichtung nach Anspruch 1, **dadurch gekennzeichnet, dass** die oder jede Montageschraube (17) der ersten Gruppe von Montageelementen in eine jeweilige erste Öffnung (19), die sich an der ersten Seitenwand (16a) des Gehäuses (15) der jeweiligen faseroptischen Verwaltungseinheit (14, 14') befindet, gesteckt wird, wenn die jeweilige faseroptische Verwaltungseinheit (14, 14') in eine erste lineare Richtung (X) relativ zum Montagerahmen (11) bewegt wird.

3. Faseroptische Verteilungsvorrichtung nach Anspruch 2, **dadurch gekennzeichnet, dass** der eine oder jeder Montagestift (20) der zweiten Gruppe von Montagelementen in eine jeweilige zweite Öffnung (21) der zweiten Montageschiene (12b) des Montagerahmens (11) gesteckt wird, wenn die jeweilige faseroptische Verwaltungseinheit (14, 14') danach in eine zweite lineare Richtung (Y) relativ zum Montagerahmen (11) bewegt wird, wobei die zweite lineare Richtung (Y) fast senkrecht zur ersten linearen Richtung (X) verläuft.

4. Faseroptische Verteilungsvorrichtung nach einem der Ansprüche 1 bis 3, **dadurch gekennzeichnet, dass**
die erste Gruppe von Montageelementen mindestens zwei Montageschrauben (17), die an die erste Montageschiene (12a) des Montagerahmens (11) montiert sind, und mindestens zwei erste Öffnungen (19), die sich an einer ersten Seitenwand (16a) der jeweiligen faseroptischen Verwaltungseinheit (14, 14') befinden, umfasst,
die zweite Gruppe von Montageelementen mindestens zwei Montagestifte (20), die sich von der zweiten Seitenwand (16b) des Gehäuses (15) der jeweiligen faseroptischen Verwaltungseinheit (14, 14') erstrecken, und mindestens zwei zweite Öffnungen (21) der zweiten Montageschiene (12b) des Montagerahmens (11) umfasst.

5. Faseroptische Verteilungsvorrichtung nach einem der Ansprüche 1 bis 4, **dadurch gekennzeichnet, dass** die oder jede erste Öffnung (19), die sich an der ersten Seitenwand (16a) der jeweiligen faseroptischen Verwaltungseinheit (14, 14') befindet, mit der ersten Seitenwand (16a) des Gehäuses (15) der jeweiligen faseroptischen Verwaltungseinheit (14, 14') einstückig ausgebildet ist.

6. Faseroptische Verteilungsvorrichtung nach einem der Ansprüche 1 bis 4, **dadurch gekennzeichnet, dass** die oder jede erste Öffnung (19), die sich an der ersten Seitenwand (16a) der jeweiligen faseroptischen Verwaltungseinheit (14, 14') befindet, mit einer separaten Montagehalterung (22) versehen ist, die an die erste Seitenwand (16a) der jeweiligen faseroptischen Verwaltungseinheit (14, 14') montiert ist.

7. Faseroptische Verteilungsvorrichtung nach einem der Ansprüche 1 bis 6, **dadurch gekennzeichnet, dass** der oder jeder Montagestift (20), der sich von der zweiten Seitenwand (16b) des Gehäuses (15) erstreckt, mit der zweiten Seitenwand (16b) des Gehäuses (15) der jeweiligen faseroptischen Verwaltungseinheit (14, 14') einstückig ausgebildet ist.

8. Faseroptische Verteilungsvorrichtung nach einem der Ansprüche 1 bis 6, **dadurch gekennzeichnet, dass** der oder jeder Montagestift (20), der sich von der zweiten Seitenwand (16b) des Gehäuses (15) erstreckt, durch einen separaten Stift, der an der zweiten Seitenwand (16b) des Gehäuses (15) der jeweiligen faseroptischen Verwaltungseinheit (14, 14') fest angebracht ist, bereitgestellt wird.

9. Faseroptische Verteilungsvorrichtung nach einem der Ansprüche 1 bis 8, **dadurch gekennzeichnet, dass** die oder jede erste Öffnung (19), die sich an der ersten Seitenwand (16a) befindet, als längliche Öffnung oder Schlüsselloch ausgelegt ist, die/das einen Montageschrauben-Einsteckabschnitt (19a) mit einem relativ großen Durchmesser und einen Montageschrauben-Halteabschnitt (19b) mit einem relativen kleinen Durchmesser aufweist.

10. Verfahren zum Montieren einer faseroptischen Verteilungsvorrichtung nach einem der Ansprüche 1 bis 9, umfassend die folgenden Schritte:
Bereitstellen eines Montagerahmens (11) mit mindestens zwei vertikal ausgerichteten Montageschienen (12a, 12b) und einer an den Montagerahmen (11) zu installierenden faseroptischen Verwaltungseinheit (14, 14');
Installieren der oder jeder Montageschraube (17) der ersten Gruppe von Montageelementen an der ersten Montageschiene (12a) des Montagerahmens;
Einstecken der oder jeder Montageschraube (17) der ersten Gruppe von Montageelementen in einer jeweiligen ersten Öffnung (19) der ersten Gruppe von Montageelementen;
Einstecken des oder jedes Montagestifts (20) der zweiten Gruppe von Montageelementen in eine jeweilige zweite Öffnung (21) der zweiten Gruppe von Montageelementen.

11. Verfahren nach Anspruch 10, **dadurch gekennzeichnet, dass** die oder jede Montageschraube (17) der ersten Gruppe von Montageelementen in die jeweilige erste Öffnung (19) der ersten Gruppe von Montageelementen gesteckt wird, wenn die jeweilige faseroptische Verwaltungseinheit (14, 14') in eine erste lineare Richtung (X) relativ zum Montagerahmen (11) bewegt wird.

12. Verfahren nach Anspruch 11, **dadurch gekennzeichnet, dass** der oder jeder Montagestift (20) der zweiten Gruppe von Montagelementen in eine jeweilige zweite Öffnung (21) der zweiten Montageschiene (12b) des Montagerahmens (11) gesteckt wird, wenn die jeweilige faseroptische Verwaltungseinheit (14, 14') danach in eine zweite lineare Richtung (Y) relativ zum Montagerahmen (11) bewegt wird, wobei die zweite lineare Richtung (Y) fast senkrecht zur ersten linearen Richtung (X) verläuft.

## Revendications

1. Dispositif de distribution de fibres optiques (10), comprenant :
un cadre de montage (11) ayant au moins deux barres de montage orientées verticalement (12a, 12b) ; au moins une unité de gestion de fibre optique (14, 14') montée sur le cadre de montage (11), où l'unité de gestion de fibre optique respective (14, 14') comprend un châssis (15), le châssis (15) ayant des parois latérales (16a, 16b) ;
des éléments de montage pour monter l'unité de gestion de fibre optique respective (14) sur les barres de montage orientées verticalement (12a, 12b) du cadre de montage (11),
**caractérisé par**
un premier groupe d'éléments de montage qui est pourvu par au moins une vis de montage (17) montée au niveau d'une première barre de montage (12a) du cadre de montage (11) et par au moins une première ouverture (19) située au niveau d'une première paroi latérale (16a) du châssis (15) de l'unité de gestion de fibre optique respective (14, 14'),
un second groupe d'éléments de montage qui est pourvu par au moins une broche de montage (20) s'étendant depuis une seconde paroi latérale (16b) du châssis (15) de l'unité de gestion de fibre optique respective (14, 14') et par au moins une seconde ouverture (21) d'une seconde barre de montage (12b) du cadre de montage (11).

2. Dispositif de distribution de fibres optiques selon la revendication 1, **caractérisé en ce que** la, ou chaque, vis de montage (17) du premier groupe d'éléments de montage est insérée dans une première ouverture respective (19) située au niveau de la première paroi latérale (16a) du châssis (15) de l'unité de gestion de fibre optique respective (14, 14') lorsque l'unité de gestion de fibre optique respective (14, 14') se déplace dans une première direction linéaire (X) par rapport au cadre de montage (11) .

3. Dispositif de distribution de fibres optiques selon la revendication 2, **caractérisé en ce que** la, ou chaque, tige de montage (20) du second groupe d'éléments de montage vient s'insérer dans une seconde ouverture respective (21) de la seconde barre de montage (12b) du cadre de montage (11) lorsque l'unité de gestion de fibre optique respective (14, 14') est ensuite déplacée dans une seconde direction linéaire (Y) par rapport au cadre de montage (11), où ladite seconde direction linéaire s'étend (Y) presque perpendiculairement par rapport à ladite première direction linéaire (X).

4. Dispositif de distribution de fibres optiques selon l'une des revendications 1 à 3, **caractérisé en ce que**
le premier groupe d'éléments de montage comprend au moins deux vis de montage (17) montées sur la première barre de montage (12a) du cadre de montage (11) et au moins deux premières ouvertures (19) situées au niveau de la première paroi latérale (16a) de l'unité de gestion de fibre optique respective (14, 14'),
le second groupe d'éléments de montage comprend au moins deux tiges de montage (20) s'étendant depuis la seconde paroi latérale (16b) du châssis (15) de l'unité de gestion de fibre optique respective (14, 14') et au moins deux secondes ouvertures (21) de la seconde barre de montage (12b) du cadre de montage (11).

5. Dispositif de distribution de fibres optiques selon l'une des revendications 1 à 4, **caractérisé en ce que** la, ou chaque, première ouverture (19) qui est située au niveau de la première paroi latérale (16a) de l'unité de gestion de fibre optique respective (14, 14') est solidaire de la première paroi latérale (16a) du châssis (15) de l'unité de gestion de fibre optique respective (14, 14').

6. Dispositif de distribution de fibres optiques selon l'une des revendications 1 à 4, **caractérisé en ce que** la, ou chaque, première ouverture (19) qui est située au niveau de la première paroi latérale (16a) de l'unité de gestion de fibre optique respective (14, 14') est pourvue par un support de montage séparé (22) monté sur la première paroi latérale (16a) de l'unité de gestion de fibre optique respective (14, 14').

7. Dispositif de distribution de fibres optiques selon l'une des revendications 1 à 6, **caractérisé en ce que** la, ou chaque, tige de montage (20) qui s'étend depuis la seconde paroi latérale (16b) du châssis (15) est solidaire de la seconde paroi latérale (16b) du châssis (15) de l'unité de gestion de fibre optique respective (14, 14').

8. Dispositif de distribution de fibres optiques selon l'une des revendications 1 à 6, **caractérisé en ce que** la, ou chaque, tige de montage (20) qui s'étend depuis la seconde paroi latérale (16b) du châssis (15) est pourvue par une tige séparée étant rattachée de manière fixe à la seconde paroi latérale (16b) du châssis (15) de l'unité de gestion de fibre optique respective (14, 14').

9. Dispositif de distribution de fibres optiques selon l'une des revendications 1 à 8, **caractérisé en ce que** la, ou chaque, première ouverture (19) qui est située au niveau de la première paroi latérale (16a) est conçue sous la forme d'une ouverture oblongue ou d'un trou de serrure ayant une section d'entrée de vis de montage (19a) avec un diamètre relativement grand et une section de maintien de vis de montage (19b) avec un diamètre relativement petit.

10. Procédé d'assemblage d'un dispositif de distribution de fibres optiques selon l'une des revendications 1 à 9, comprenant les étapes suivantes :
pourvoir un cadre de montage (11) comportant au moins deux barres de montage orientées verticalement (12a, 12b) et une unité de gestion de fibre optique (14, 14') à installer sur le cadre de montage (11) ;
installer la, ou chaque, vis de montage (17) du premier groupe d'éléments de montage au niveau de la première barre de montage (12a) du cadre de montage (11) ;
insérer la, ou chaque, vis de montage (17) du premier groupe d'éléments de montage dans une première ouverture respective (19) du premier groupe d'éléments de montage ;
insérer la, ou chaque, tige de montage (20) du second groupe d'éléments de montage dans une seconde ouverture respective (21) du second groupe d'éléments de montage.

11. Procédé selon la revendication 10, **caractérisé en ce que** la, ou chaque, vis de montage (17) du premier groupe d'éléments de montage s'insère dans la première ouverture respective (19) du premier groupe d'éléments de montage lorsque l'unité de gestion de fibre optique respective (14, 14') se déplace dans une première direction linéaire (X) par rapport au cadre de montage (11) .

12. Procédé selon la revendication 11, **caractérisé en ce que** la, ou chaque, tige de montage (20) du second groupe d'éléments de montage s'insère dans une seconde ouverture respective (21) de la seconde barre de montage (12b) du cadre de montage (11) lorsque l'unité de gestion de fibre optique respective (14, 14') est ensuite déplacée dans une seconde direction linéaire (Y) par rapport au cadre de montage (11), où ladite seconde direction linéaire s'étend (Y) presque perpendiculairement par rapport à ladite première direction linéaire (X).
